Europäisches Patentamt

European Patent Office

Office européen des brevets

(11) Publication number: **0 392 494**
**A2**

## (12) EUROPEAN PATENT APPLICATION

(21) Application number: **90106933.6**

(51) Int. Cl.5: **G06G 7/60**

(22) Date of filing: **11.04.90**

(30) Priority: **12.04.89 JP 90660/89**

(43) Date of publication of application:
**17.10.90 Bulletin 90/42**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Tsutomu, Miki, c/o Omron**
**Corporation**
**Intell. Property Center, 20, Igadera,**
**Shimokaiinji**
**Nagaokakyo-shi, Kyoto 617(JP)**

(74) Representative: **WILHELMS, KILIAN &**
**PARTNER Patentanwälte**
**Eduard-Schmid-Strasse 2**
**D-8000 München 90(DE)**

(54) **Fuzzy processor.**

(57) There is provided architecture for performing a product operation in place of a MIN operation (truncating) of the result of an inference operation in an antecedent and a membership function in a consequent. Therefore, no truncation circuit is required.

Fig. I

## Fuzzy Processor

## BACKGROUND OF THE INVENTION

### Field of the Invention

The present invention relates to a fuzzy processor. The fuzzy processor means herein an apparatus referred to as a fuzzy controller, a fuzzy computer, a fuzzy inference operation unit or the like for implementing fuzzy inferences irrespective of whether the input is fuzzy information or definite value information.

### Description of the Prior Art

Fuzzy processors referred to as a fuzzy controller or a fuzzy computer have been realized. The fuzzy processors are of an analogue type and a digital type. A typical processor of the analogue type is described in, for example, Japanese Patent Application Laid Open Publication No. 63-123177, U.S. Patent No. 4,875,184 or EP-A-268 182. In this analogue type fuzzy processor, a membership function in at least a consequent is represented by a signal distribution (a voltage distribution or a current distribution) on a plurality of lines. A MIN operation (truncating) of the result of an operation in an antecedent and the membership function in the consequent is performed, thereby to obtain the results of inferences with respect to one rule (control rule). Consequently, a circuit (truncation circuit) for executing the MIN operation of the result of the inference in the antecedent and each of signals distributed on the plurality of lines representing the membership function in the consequent is required. This circuit includes MIN circuits which are identical in number to the lines for representing the membership function in the consequent. Accordingly, the circuit becomes large in scale, which is a problem particularly in formation as an integrated circuit.

## SUMMARY OF THE INVENTION

An object of the present invention is to simplify a circuit in a fuzzy processor in which a membership function in at least a consequent is represented by signals distributed on a plurality of lines.

The present invention is characterized by providing, in a fuzzy processor in which a membership function in a consequent is represented by a signal distribution on a plurality of lines, a grade modulator circuit for proportionally changing the levels of all signals generated from a signal distribution generator circuit included in a circuit for generating membership function in the consequent depending on the result of an inference in an antecedent.

According to the present invention, all the signals representing the membership function which are outputted from the consequent membership function generator circuit and distributed on the plurality of lines are proportionally adjusted depending on the result of the inference in the antecedent. Consequently, a product operation of the membership function in the consequent and the result of the inference in the antecedent is executed.

According to the present invention, therefore, no truncation circuit is required, thereby allowing a circuit to be made small in scale to some extent, which is advantageous for formation as an integrated circuit.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a block diagram showing an embodiment of the present invention;

Fig. 2 is a diagram showing an example of membership functions;

Fig. 3 is a diagram showing the process of inferences; and

Fig. 4 is a block diagram showing an example of the construction of a membership function generator circuit and a diagram showing membership functions outputted therefrom.

## DESCRIPTION OF THE PREFERRED EMBODIMENTS

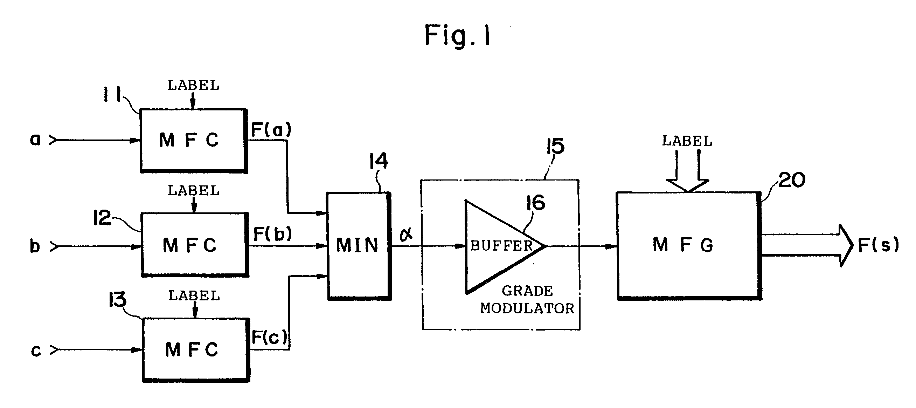

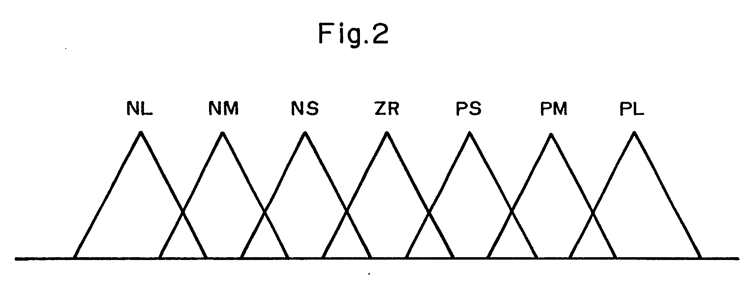

Fig. 1 shows a circuit portion, which implements fuzzy inferences in accordance with one rule, in a fuzzy controller. This fuzzy controller can cope with three types of inputs. Membership function circuits (referred to as MFCs hereinafter) 11 to 13 are respectively provided for the inputs. The MFC is used for outputting a signal representing a membership function value (grade) corresponding to an input value. A predetermined membership function is set in the MFC by a label. As membership functions, seven types of membership functions from NL to PL are considered as shown in, for example, Fig. 2. Here N, P, L, M and S respectively represent "Negative", "Positive", "Large", "Medium", and "Small". Consequently, NL represents a negative large value, and PS represents a positive small value, for example. ZR represents almost zero. Linguistic information representing such a membership function is referred to as a label. A label conforming to a rule has been previously set in each of the MFCs 11 to 13.

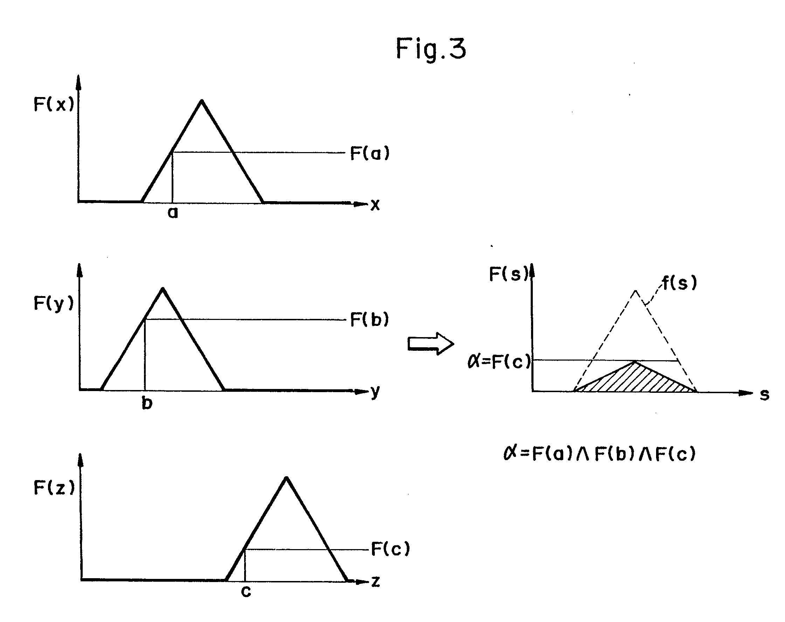

Fig. 3 shows the process of inferences. Referring also to Fig. 3, let membership functions set in the MFCs 11, 12 and 13 be respectively F(x), F(y) and F(z). When inputs a, b and c are respectively applied to the MFCs 11, 12 and 13, function values F(a), F(b) and F(c) are respectively outputted. The outputs F(a) to F(c) are then applied to a MIN circuit 14, to execute the MIN operation. More specifically, the smallest one of the outputs F(a), F(b) and F(c) is selected. In the example shown in Fig. 3, the result of the MIN operation is the output F(c), which is taken as $\alpha$.

The output $\alpha$ of the MIN circuit 14 is applied to a grade modulator circuit 15. This grade modulator circuit 15 is constituted by, for example, a buffer amplifier 16. An output of the buffer amplifier 16 is applied to a membership function generator circuit (referred to as MFG hereinafter) 20.

A predetermined membership function is also set as a membership function in a consequent in the MFG 20 by a label, as represented by a broken line f(s) in Fig. 3. A membership function F(s) (represented by hatching in Fig. 3) generated by multiplying this function f(s) by a factor $\alpha$ ($\alpha$ is a positive value smaller than 1) is outputted from the MFG 20 as a signal distribution on a plurality of lines. This outputted membership function F(s) means the product of the membership function f(s) in the consequent and the result $\alpha$ of processing in an antecedent.

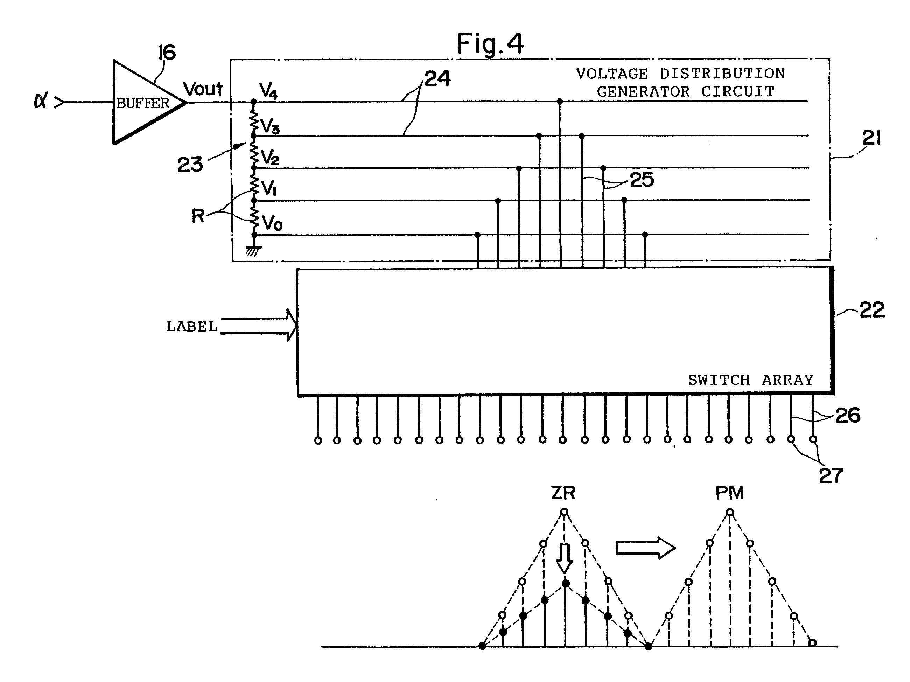

Fig. 4 shows one specific example of the MFG 20. This MFG 20 is used for generating a membership function represented by voltage signals distributed on, for example, 25 output lines 26 (output terminals 27) and comprises a voltage distribution generator circuit 21 and a switch array 22. The output lines 26 extend from the switch array 22.

The voltage distribution generator circuit 21 includes a voltage divider 23. The voltage divider 23 comprises, for example, a series connection of a plurality of resistors R which are equal in value. An output voltage of the buffer amplifier 16 (which is taken as $V_{out}$) is applied to the voltage divider 23. Divided voltages $V_4$ (= $V_{out}$), $V_3$, $V_2$, $V_1$ and $V_0$ (= 0) are outputted from this voltage divider 23 onto lines 24 extending from the voltage divider 23.

Nine lines 25 are connected to the lines 24 so as to generate a voltage distribution representing a membership function having a label ZR to be a reference. The lines 25 are inputted to the switch array 22.

The switch array 22 is used for shifting a voltage distribution on the nine lines 25 into a predetermined position on the 25 output lines 26 (output terminals 27). For example, if the voltage distribution on the lines 25 passes through the switch array 22 without any modification, the voltage distribution representing the membership function having the label ZR appears at the output terminals 27. If the voltage distribution on the lines 25 is shifted eight lines to the right, a voltage distribution representing a membership function having a label PM is outputted to the output terminals 27. The details of such a switch array 22 is described in the above described Japanese Patent Application Laid Open Publication, U.S. Patent or EP Application Publication.

A voltage represented by the output $\alpha$ of the MIN circuit 14 is converted into a suitable voltage $V_{out}$ by the buffer amplifier 16, to be applied to the voltage divider 23 in the voltage distribution generator circuit 21. Consequently, the output voltages $V_4$ to $V_0$ of the voltage divider 23 are changed in proportion to this voltage $V_{out}$ (i.e.,$\alpha$ ). Therefore, a membership function represented by a triangle-shaped voltage distribution in which a peak voltage value is defined by $\alpha$ is outputted.

Although the present invention has been described and illustrated in detail, it is clearly understood that the same is by way of illustration and example only and is not to be taken by way of limitation, the spirit and scope of the present invention being limited only by the terms of the appended claims.

## Claims

In a fuzzy processor in which a membership function in a consequent is represented by a signal distribution on a plurality of lines, the fuzzy processor being characterized by providing a grade modulator circuit for proportionally changing the levels of all signals generated·from a signal distribution generator circuit included in a consequent membership function generator circuit depending on the result of an inference in an antecedent.

# Fig. 1

EP 0 392 494 A2

Fig.2

# Fig. 3

$\alpha = F(a) \wedge F(b) \wedge F(c)$

EP 0 392 494 A2

Fig.4